# EUROPEAN PATENT SPECIFICATION

(11) **EP 2 549 696 B1**
(45) Date of publication and mention of the grant of the patent: **29.03.2017**
(21) Application number: 10853877.8
(22) Date of filing: 29.06.2010
(51) Int. Cl.: H04L 12/66

(54) **METHOD, DEVICE AND SYSTEM FOR NEGOTIATING MULTIMEDIA CAPABILITY**
VERFAHREN, VORRICHTUNG UND SYSTEM ZUR AUSHANDLUNG VON MULTIMEDIATAUGLICHKEIT
PROCÉDÉ, DISPOSITIF ET SYSTÈME DE NÉGOCIATION DE LA CAPACITÉ MULTIMÉDIA

(43) Date of publication of application: 23.01.2013
(73) Proprietor: Huawei Technologies Co., Ltd., Longgang District Shenzhen, Guangdong 518129 (CN)
(72) Inventor: YANG, Weiwei, Shenzhen Guangdong 518129 (CN); WANG, Jingyi, Shenzhen Guangdong 518129 (CN)
(74) Representative: Pfenning, Meinig & Partner mbB
(86) International application number: PCT/CN2010/074714
(87) International publication number: WO 2012/000172

(56) References cited:
- EP-A1- 2 034 689
- EP-A1- 2 081 347
- EP-A1- 2 083 543
- WO-A1-2008/003256
- WO-A1-2009/121273
- CN-A- 101 552 746
- HUAWEI: "Proposed draft of package for H.248.SDPVER", ITU-T STUDY GROUP 16 - CONTRIBUTION 66, ITU TELECOMMUNICATION STANDARDIZATION SECTOR TEMPORARY DOCUMENT, ITU-T QUESTION 3/16 (WP 2/16), 1 November 2006 (2006-11-01), pages 1-8, XP002544230,
- F. CUERVO ET AL. RFC3015, MEGACO PROTOCOL VERSION 1.0 November 2000, XP015008798

## Description

### FIELD OF THE INVENTION

The present invention relates to the field of communications technologies, and in particular, to a method, an apparatus, and a system for multimedia capability negotiation.

### BACKGROUND OF THE INVENTION

In an architecture where a bearer is separated from control, generally a gateway control protocol such as H.248 is used as a control protocol between a service layer control entity and a media plane execution entity. In this mechanism, the media plane execution entity includes a media gateway (Media Gateway, MG), while the service layer control entity includes a media gateway controller (Media Gateway Controller, MGC).

Because the session description protocol (Session Description Protocol, SDP) is not designed for multimedia capability negotiation between network entities and preferential selection based on the multimedia capability negotiation, the Internet engineering task force (Internet Engineering Task Force, IETF) defines an SDP-based enhanced multimedia capability negotiation mechanism and introduces concepts of an actual configuration (Actual Configuration) and a potential configuration (Potential Configuration). A combination of the actual configuration and the potential configuration may be used in a normal session negotiation process to carry a support capability and selection for different multimedia description configurations between network entities. However, in H.248, in one aspect, the use and usage of the SDP are subject to strict control of a master/slave mode of the MGC and MG, and a size of an SDP message needs to be increased linearly to support different media description configurations; and in another aspect, in an H.248 protocol mechanism, a group (Group) is used to include different media descriptions, and there is no difference between a potential configuration and an actual configuration. Therefore, in an existing mechanism, an MG and an MGC cannot perform multimedia capability negotiation.

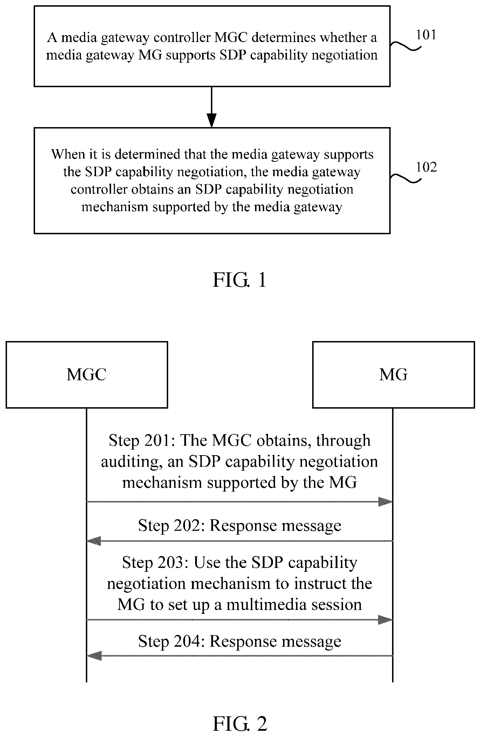

EP 2081347 A1 discloses a method for negotiating a SDP version between a MGC and a MG. The MGC can obtain the SDP version supported by the MG through the Audit Command.(FIG. 2) The MG, after receiving the Audit Command, determines whether the SDP version to be used is supported by the MG, and returns the response to the MGC.

EP 2083543 A1 discloses a method which allows the MGC to audit the SDP capability information related to the MG. The SDP capability information includes a supported SDP parameter and a value o the SDP parameter. The MGC may send an audit command carrying property parameters respectively corresponding to each SDP capability to be requested by the MGC. In response to the command request, the MG carries all the SDP capability information of itself in a command response and returns the command response to the MGC.

HUAWEI: "Proposed draft of package for H.248.SDPVER",ITU-T STUDY GROUP 16 - CONTRIBUTION 66, November 2009, XP-002544230 discusses about a mechanism to negotiate on the SDP version between the MGC and MG. It is proposed that a package on root be developed to enable a MGC to audit the MG to determine what SDP versions are possible. The MGC can then set this property to indicate which version of SDP it will be using. A further package allows the MGC to audit the MG to determine which SDP parameters are supported.

### SUMMARY OF THE INVENTION

Embodiments of the present invention provide a method, an apparatus, and a system for multimedia capability negotiation, so as to solve a problem that an MG and an MGC cannot perform multimedia capability negotiation in the prior art.

An embodiment of the present invention provides a method for multimedia capability negotiation, where the method includes:
determining, by a media gateway controller MGC and through an audit command, whether a media gateway MG supports SDP capability negotiation; wherein the audit command comprises a functional package of the SDP capability negotiation, and if the MG supports the funcational package of the SDP capability negotiation, the MG supports the SDP capability negotiation ; and
when it is determined that the media gateway supports the SDP capability negotiation, obtaining, by the media gateway controller, an SDP capability negotiation mechanism supported by the media gateway, wherein the SDP capability negotiation mechanism includes a transmission capability, a media property, an encoding or decoding type;
wherein a property parameter that carries the SDP capability negotiation mechanism is defined in the functional package of the SDP capability negotiation, and the MGC obtains, by auditing the property parameter that carries the SDP capability negotiation mechanism, the SDP capability negotiation mechanism supported by the MG;
wherein, the MGC obtains SDP capability negotiation mechanisms on different levels on the MG by auditing the property parameter that carries the SDP capability negotiation mechanism, wherein the different levels indicate a support condition of an SDP capability negotiation mechanism in different scenarios, and the property parameter is used on a root termination to indicate that an SDP capability negotiation mechanism is supported by the whole MG; or
the property parameter is used on a specific termination other than a root termination to indicate that an SDP capability negotiation mechanism is supported on the specific termination; or
the property parameter is used on a media stream plane to indicate that an SDP capability negotiation mechanism is supported by a media stream or a media type.

An embodiment of the present invention further provides a media gateway controller MGC, including an auditing module and an obtaining module, where:
the auditing module is configured to send an audit command to a media gateway MG to determine whether the MG supports SDP capability negotiation; and
wherein the audit command comprises a functional package of the SDP capability negotiation, and if the MG supports the functional package of the SDP capability negotiation, the MG supports the SDP capability negotiation, the audit command further carries a property parameter of the SDP capability negotiation mechanism, to obtain an SDP capability negotiation mechanism supported by the MG, wherein the SDP capability negotiation mechanism includes a transmission capability, a media property, an encoding or decoding type, wherein the property parameter is used on a root termination to indicate that an SDP capability negotiation mechanism is supported by the whole MG, or the the property parameter is used on a specific termination other than a root termination to indicate that an SDP capability negotiation mechanism is supported on the specific termination, or the property parameter is used on a media stream plane to indicate that an SDP capability negotiation mechanism is supported by a media stream or a media type; and
the obtaining module is configured to obtain an audit result returned by the MG in response to the audit command, wherein the audit result comprises information indicating that the MG supports the SDP capability negotiation and the SDP capability negotiation mechanism supported by the MG in response to the audit command
the obtaining module is configured to obtain an audit result returned by the MG in response to the audit command, where information indicating that the MG supports the SDP capability negotiation is included.

An embodiment of the present invention further provides a media gateway, including a receiving module and a responding module, where:
the receiving module is configured to receive an audit command sent by a media gateway controller MGC, wherein the audit command comprises a functional package of SDP capability negotiation and a property parameter that carries an SDP capability negotiation mechanism is defined in the functional package of the SDP capability negotiation, wherein the SDP capability negotiation mechanism includes a transmission capability, a media property, an encoding or decoding type, and the property parameter can be used on root termination to indicate that an SDP capability negotiation mechanism is supported by the whole MG, or on a specific termination other than a root termination to indicate that an SDP capability negotiation mechanism is supported on the specific termination , or on a media stream plane to indicate that an SDP capability negotiation mechanism is supported by a media stream or a media type; and
if the MG supports the function package of the SDP capability negotiation, the responding module is configured to return an audit result that comprises information indicating the SDP capability negotiation is supported, and the SPD capability negotiation mechanism supported by the MG on different level according to the property parameter acquired from the audit command, wherein the different levels indicate a support condition of an SDP capability negotiation mechanism in different scenarios.

An embodiment of the present invention further provides a system for multimedia capability negotiation, where the system includes a media gateway controller as described above and a media gateway as described above.

In the embodiments of the present invention, whether an MG supports multimedia capability negotiation may be determined, and when it is determined that the MG supports the multimedia capability negotiation, a multimedia capability negotiation mechanism supported by the MG may be further obtained. In the embodiments of the present invention, a technological gap in multimedia capability negotiation in an architecture where an MG is separated from an MGC is filled.

### BRIEF DESCRIPTION OF THE DRAWINGS

To describe the technical solutions in the embodiments of the present invention or in the prior art more clearly, the accompanying drawings required for describing the embodiments or the prior art are briefly introduced in the following. Apparently, the accompanying drawings in the following description are some embodiments of the present invention, and persons of ordinary skill in the art may still derive other drawings from these accompanying drawings without creative efforts.
FIG. 1 is a flowchart of a method for multimedia capability negotiation according to an embodiment of the present invention;
FIG. 2 is a signaling flowchart of a method according to an embodiment of the present invention;
FIG. 3 is a schematic structural diagram of a media gateway controller according to an embodiment of the present invention;
FIG. 4 is a schematic structural diagram of a media gateway according to an embodiment of the present invention; and
FIG. 5 is a schematic structural diagram of a system for multimedia capability negotiation according to an embodiment of the present invention.

### DETAILED DESCRIPTION OF THE EMBODIMENTS

The technical solutions in the embodiments of the present invention are described clearly and completely in the following with reference to the accompanying drawings in the embodiments of the present invention. Apparently, the embodiments to be described are only a part rather than all of the embodiments of the present invention. Base on the embodiments of the present invention, all other embodiments obtained by persons of ordinary skill in the art without making any creative effort fall within the protection scope of the present invention.

### Embodiment 1

FIG. 1 is a flowchart of a method for multimedia capability negotiation according to an embodiment of the present invention. As shown in FIG. 1, the method in this embodiment includes:
Step 101: A media gateway controller determines whether a media gateway supports SDP capability negotiation.

SDP is used for multimedia description in this embodiment. Therefore, multimedia capability negotiation is also called SDP capability negotiation.

A functional package of the SDP capability negotiation is newly defined in this embodiment of the present invention, and is specifically used for auditing whether the MG supports the SDP capability negotiation.

For example, a media gateway controller (MGC) may send an audit command to a media gateway (MG) to determine whether the MG supports SDP capability negotiation. In specific implementation, the MGC may send an audit command to the MG, where a functional package of SDP capability negotiation is included in the audit command. If the MG supports the functional package of the SDP capability negotiation, it is considered that the MG supports the SDP capability negotiation; and if the MG does not support the functional package of the SDP capability negotiation, it is considered that the MG does not support the SDP capability negotiation.

A revised offer/answer SDP support (Revised Offer/Answer SDP Support) package is a functional package of the SDP capability negotiation, which is only an exemplary example, and definitely, the present invention is not limited here.

For example, for a definition format of the revised offer/answer SDP support package, reference may be made to the following:
Package Name: Revised Offer/Answer SDP Support
PackageID: eroas, binary 0x????
Description: This package allows the support of the SDP Capability Negotiation syntax between an MGC and MG
Version: 1
Extends: None

The audit command sent by the MGC to the MG includes the revised offer/answer SDP functional package, which indicates that the MGC supports the SDP capability negotiation.

If the MG supports the revised offer/answer SDP support package, it is considered that the MG supports the SDP capability negotiation; and if the MG does not support the revised offer/answer SDP support package, it is considered that the MG does not support the SDP capability negotiation.

Step 102: When it is determined that the media gateway supports the SDP capability negotiation, the media gateway controller obtains an SDP capability negotiation mechanism supported by the media gateway.

Because there are multiple different SDP capability negotiation mechanisms, when the MG supports the SDP capability negotiation, the MGC may further obtain the SDP capability negotiation mechanism supported by the MG.

In addition to an existing SDP capability negotiation mechanism, a new mechanism may emerge with the development of network technologies. To ensure that a solution has good forward technology compatibility, a property parameter may be defined in a functional package of SDP capability negotiation to carry an SDP capability negotiation mechanism. In this way, the MGC may audit the property parameter that carries the SDP capability negotiation mechanism to obtain an SDP capability negotiation mechanism supported by the MG. Taking the revised offer/answer SDP support package as an example, a property parameter SDPCapNeg Extensions may carry an SDP capability negotiation mechanism by defining the property parameter named SDP capability negotiation extension (SDPCapNeg Extensions) in the functional package.

For example, for a definition format of the property parameter capability negotiation extension (SDPCapNeg Extensions), reference may be made to the following:
Property Name: SDPCapNeg Extensions
PropertyID: sdpe, (0x0001)
Description: This property allows the MGC to determine which SDPCapNeg extensions are supported on the gateway/termination/stream
Type: Sub-list of String
Possible values: As per the IANA registry.
Default: "cap-v0"
Defined in: TerminationState, LocalControl
Characteristics: Read/Write

In the foregoing definition, the property name is SDP capability negotiation extension (SDPCapNeg Extensions), which is abbreviated to sdpe. The property type is a sub-list of string. The property parameter carries, through different string items, the SDP capability negotiation mechanism (namely, a multimedia capability negotiation mechanism) supported by the MG, where the SDP capability negotiation mechanism includes a transmission capability, a media property, an encoding or decoding type, and so on. A value of the property parameter may be an SDP capability negotiation mechanism named as authorized by the Internet assigned numbers authority (Internet Assigned Numbers Authority, IANA), for example, a value "cap-v0" indicates an SDP transmission capability negotiation mechanism defined by the IETF, and a value "med-v0" indicates an SDP media type capability negotiation mechanism defined by the IETF.

A default (Default) value of the property parameter is defined as "cap-v0". Therefore, in the operation of the foregoing step 101, when the MGC learns, through an audit, that the MG supports the functional package of the SDP capability negotiation, though the property parameter SDP capability negotiation extension may not need to be carried, the MGC may consider by default that the MG supports an SDP capability negotiation mechanism of "cap-v0". If the MGC wants to further obtain another SDP capability negotiation mechanism supported by the MG, the operation described in step 102 is also needed.

According to physical division of the media gateway, the property parameter is defined on different levels, which may indicate a support condition of an SDP capability negotiation mechanism in different scenarios, for example, the property defined in a termination state (TerminationState) descriptor correspondingly indicates an SDP capability negotiation mechanism supported by a certain termination on the MG, while the property defined in a local control (LocalControl) descriptor indicates an SDP capability negotiation mechanism supported by a certain media stream, namely, a certain media type (such as audio or video).

Therefore, when the MG supports the revised offer/answer SDP support package, that is, the MG supports the SDP capability negotiation, the MGC may further audit a property parameter SDP capability negotiation extension (SDPCapNeg Extensions) on the MG to obtain an SDP capability negotiation mechanism supported by the MG.

In specific implementation, the MGC may send an audit command to the MG once to learn whether the MG supports the functional package of the SDP capability negotiation and the SDP capability negotiation mechanism that is supported by the MG.

The SDPCapNeg Extensions property parameter may be carried on different levels on the MG and used for media gateway resources of different granularities. Therefore, the MGC may audit the property parameter that carries the SDP capability negotiation mechanism, to obtain SDP capability negotiation mechanisms with different levels on the MG, as shown in an audit message in the following example.

In example 1, the property parameter SDPCapNeg Extensions is used on a root termination (Root Termination), and indicates an SDP capability negotiation mechanism supported by the whole MG. For a specific H.248 message, reference may be made to the following:

```
          MGC to MG:
          MEGACO/3 [123.123.123.4]:55555
          Transaction = 10005 {
           Context = 2000 {
           AuditCapability = ROOT {
           Audit {
                Media {
                    TerminationState {eroas/sdpe}
                        }
                    }
                }
            }
          }
```

If the MG receives an audit that is performed by the MGC on the root termination (Root Termination), the MG should report all SDP capability negotiation mechanisms supported by the MG to the MGC.

In example 2, the property parameter SDPCapNeg Extensions is used on a specific termination (an A2222 termination in this example) other than the root termination. And the property parameter SDPCapNeg Extensions indicates an SDP capability negotiation mechanism supported by the specific termination. For a specific H.248 message, reference may be made to the following:

```
          MGC to MG:
          MEGACO/3 [123.123.123.4]:55555
          Transaction = 10005 {
           Context = 2000 {
           AuditCapability = A2222 {
           Audit {
                Media {
                    TerminationStates{eroas/sdpe}
                        }
                    }
                }
            }
          }
```

In example 3, the property parameter SDPCapNeg Extensions is used on a media stream plane and indicates an SDP capability negotiation mechanism supported by a media stream or a media type. For example, if the MGC wants to know an extension mechanism supported by the MG for a specific media type (such as audio or video), the MGC may use the SDP capability negotiation extension (SDPCapNeg Extensions) property parameter to perform auditing and obtaining an SDP capability negotiation mechanism in the local control (LocalControl) descriptor. In this case, the MGC may indicate, in a media stream description, a media type it wants to audit.

The property parameter SDPCapNeg Extensions is used on a certain media stream (the following is a media stream identified as 1 on the A2222 termination, where the media stream 1 may be a certain video stream) plane and indicates an SDP capability negotiation mechanism that is matched with the media stream or a media type.

```
          MGC to MG:
          MEGACO/3 [123.123.123.4]:55555
          Transaction = 10005 {
           Context = 2000 {
           AuditCapability = A2222 {
           Audit {
                Media {
                    Stream=1 {
                        LocalControl {eroas/sdpe}
                            }
                        }
                    }
                }
            }
          }
```

The MGC may also use wildcarding CHOOSE (wildcarding CHOOSE) to determine a value of the SDP capability negotiation extension (SDPCapNeg Extensions) property parameter, where the value is taken by a single termination or a media stream on the MG, namely, the SDP capability negotiation mechanism supported by the MG.

If the MGC learns that the MG supports a certain SDP capability negotiation mechanism, the MGC may perform multimedia capability negotiation with the MG by using a corresponding SDP capability negotiation mechanism. For example, when the MG supports an SDP transmission capability negotiation mechanism indicated by "cap-v0", in SDP, the MGC may use an "a=acap:" attribute (attribute) defined in the mechanism to carry attribute information of SDP capability negotiation, use an "a=tcap:" attribute to carry a support capability of a transmission protocol, use an "a=pcfg:" attribute to carry a supported possible configuration, and use an "a=acfg:" attribute to carry a media description configuration used in an SDP session description answer. In such a definition mechanism, the MGC may directly use a revised offer/answer SDP support mechanism, and does not need to perform conversion of an H.248 group message.

Further, because of the SDP capability negotiation mechanism, multiple media description configurations exist in a message between the MGC and the MG. Therefore, when the MGC delivers multiple media capability description configurations to the MG through the SDP capability negotiation mechanism, resource allocation of the MG may be controlled through a reserve group (Reserve Group) parameter and a reserve value (Reserve Value) parameter in the H.248 protocol. For example, when the MGC assigns values of the reserve group (Reserve Group) parameter and the reserve value (Reserve Value) parameter to "on", the MG needs to allocate bearer resources for all received media description configurations; and when the MGC assigns values of the reserve group (Reserve Group) parameter and the reserve value (Reserve Value) parameter to "off", the MG allocates resource for only one media capability description configuration (which may be a preferred one or actual one), and carries a resource allocation result in a response message to the MGC.

When the "a=pcfg:" attribute is used, the MGC may use a wildcarding CHOOSE method, namely, "a=pcfg: $". Therefore, other than an actual configuration, the MG provides another possible candidate configuration in a response message for the MGC.

If the MG cannot support SDP capability negotiation mechanism indicated by information sent from the MGC, the MG should return an error response to the MGC.

Definitely, the MGC may directly audit the foregoing defined property parameter to obtain the SDP capability negotiation mechanism supported by the MG, and does not need to audit in advance whether the MG supports SDP capability negotiation. If the MG carries the SDP capability negotiation mechanism supported by the MG in a response message, it also indicates that the MG supports the SDP capability negotiation.

### Embodiment 2

An MGC and an MG support an SDP capability negotiation mechanism, which means that different media description configurations appear in an SDP description. When different media streams (such as audio and video) exist in one session, and different media streams have multiple different media description configurations, a network entity wants to support a combination of some specific configurations. For example, an audio stream has three kinds of configurations numbered 1, 2, and 3 (different media parameters such as a transmission protocol and different encoding or decoding types may be used), and a video stream has two kinds of configurations numbered 1 and 2 (different media parameters such as a transmission protocol and different encoding or decoding types may be used). In this case, combinations of different audio streams and different video streams exist. Optionally, in another embodiment of the present invention, one property parameter may be defined for the MGC to indicate a valid set of configurations for the MG, that is, a combination of media description configurations that the MGC wants to support. For a definition format of the property parameter, reference may be made to the following:
Property Name: Session Capabilities
PropertyID: scap, (0x0002)
Description: This property allows the MGC to indicate the valid sets of configurations for a Termination based on the MediaCapNeg "Session Capability" Attribute. It also allows the MGC to request the MG to provide the valid Configuration sets
Type: Sub-list of Integer
Possible values: The values relate to the potential configurations defined in each stream. The MGC and MG shall ensure the potential configuration number is unique across all streams on the Termination
Default: None
Defined in: TerminationState
Characteristics: Read/Write

In the foregoing definition, the property name is session capabilities (Session Capabilities), which is abbreviated to scap. The property type is sub-list of integer. The property parameter carries different media description configurations through different string items. A value of the property parameter may be a different configuration number in a media stream definition, and definitely, may also be an indicator in another form. Through the defined session capabilities property parameter, the MGC may obtain a valid set of media description configurations on the MG.

The MGC uses the session capabilities (Session Capabilities) property parameter to carry the valid set of media description configurations to the MG, to instruct the MG to execute a media combination function of a multimedia session when multiple media description configurations (especially multiple media streams) exist. The MGC may choose a wildcard (wildcard CHOOSE) for the property parameter, which requires the MG to decide a valid set of media description configurations and carry, through the foregoing property parameter, a decided result in a response message to the MGC.

In specific implementation, the MGC may send an audit command to the MG once to learn an SDP capability negotiation mechanism supported by the MG, and a valid set of media description configurations on the MG.

### Embodiment 3

In a multimedia session, a condition of a media stream may vary with the proceeding of the session, for example, a video stream or another message event may need to be added in an audio session. At the same time of initial audio session negotiation, a support condition of another media description configuration by a network entity may be exchanged through an extension mechanism, which may be used for a subsequent session. Optionally, in another embodiment of the present invention, one property parameter may also be defined for an MGC to determine whether another latent configuration (latent configuration) is supported on a termination of the MG. The latent configuration indicates that an additional media stream other than a media stream that already exists on the termination. For a definition format of the property parameter, reference may be made to the following:
Property Name: Latent Configurations
PropertyID: lconf, (0x0003)
Description: This property allows the MGC to determine if additional latent configurations are supported on the Termination. A latent configuration represents an additional media stream to the one already specified on the Termination.
Type: Sub-list of String
Possible values: Each instance of String is defined as type "lcfg" according to the following ABNF:
lcfg = config-number 1*(1*WSP latent-cfg-parm)
Default: None.
Defined in: TerminationState
Characteristics: Read/Write

In the foregoing definition, the property name is latent configurations (Latent Configurations), which is abbreviated to lconf. The property type is sub-list of string. The property parameter carries different media description configurations through different string items. By defining the latent configurations property parameter, the MGC may obtain, by auditing the latent configurations property parameter, a latent media description configuration supported on the termination of the MG.

When using the latent configurations (Latent Configurations) property parameter, the MGC may not specify a specific configuration value of the property parameter (for example, using wildcarding CHOOSE), and the property parameter is used to instruct the MG to provide an additional supported media description configuration. Definitely, the MGC may also set specific latent configuration information for the MG. If the MG does not support a certain specific configuration, the configuration may be removed from a response message.

In specific implementation, the MGC may send an audit command to the MG once to learn an SDP capability negotiation mechanism supported by the MG, and obtain a latent media description configuration supported by a termination of the MG.

A session capabilities (Session Capabilities) property parameter and a latent configurations (Latent Configurations) property parameter may be used separately, and may also be used together.

At this time, in specific implementation, the MGC may send an audit command to the MG once to learn the SDP capability negotiation mechanism supported by the MG and a valid set of media description configurations on the MG, and obtain the latent media description configuration supported by the termination of the MG.

In a specific embodiment, the session capabilities (Session Capabilities) property parameter and the latent configurations (Latent Configurations) property parameter may be defined in a new functional package for implementation. For example, the functional package named enhanced SDP media capabilities negotiation support package (Enhanced SDP Media Capabilities Negotiation Support Package) implements support for the foregoing media capability negotiation between the MGC and the MG. A definition of the functional package may be extended based on the foregoing revised offer/answer SDP support package (Revised Offer/Answer SDP Support), and the functional package may also be defined separately. A definition format is as follows:
Package Name: Enhanced SDP Media Capabilities Negotiation Support
PackageID: smcn, binary 0x????
Description: This package allows the support of the indication of "Session Capabilities" and "Latent Configurations" between the MGC and MG.
Version: 1
Extends: eroas, binary 0x???? version 1

With the method for multimedia capability negotiation in the foregoing embodiment of the present invention, whether an MG supports multimedia capability negotiation may be determined. When it is determined that the MG supports the multimedia capability negotiation, a multimedia capability negotiation mechanism supported by the MG may be obtained. In the foregoing embodiment of the present invention, a technological gap in multimedia capability negotiation in an architecture where an MG is separated from an MGC is filled.

### Embodiment 4

FIG. 2 is a signaling flowchart of a method according to an embodiment of the present invention. As shown in FIG. 2, the method in this embodiment includes:
Step 201: An MGC determines whether an MG supports SDP capability negotiation, and when it is determined that the MG supports the SDP capability negotiation, the MGC obtains, through an audit command, an SDP capability negotiation mechanism supported by the MG.

Definitely, the MGC may directly audit the property parameter defined in the first embodiment, to obtain the SDP capability negotiation mechanism supported by the MG, and does not need to audit in advance whether the MG supports the SDP capability negotiation. If the MG carries, in a response message, the SDP capability negotiation mechanism supported by the MG, it also indicates that the MG supports the SDP capability negotiation.

```
          MGC to MG:
          MEGACO/3 [123.123.123.4]:55555
          Transaction = 10000 {
           Context = 2000 {
           AuditCapability = ROOT {
           Audit {
                Media {
                    TerminationStates {eroas/sdpe}
                        }
                    }
                }
            }
          }
```

Step 202: The MG carries a supported SDP capability negotiation mechanism in a response message to the MGC. In this embodiment, the MG supports an SDP transmission capability negotiation mechanism and an SDP media type capability negotiation mechanism that are defined by the IETF.

```
MEGACO/3 [124.124.124.222]:55555
          Reply = 10000 {
           Context = 2000 {
           AuditCapability = ROOT {
           Audit {
                Media {
                    TerminationStates{eroas/sdpe="cap-v0, med-v0"}
                        }
                    }
                }
            }
          }
```

Step 203: The MGC receives a network multimedia session setup request, and instructs the MG to allocate a resource for a multimedia session. The MGC may also instruct the MG to allocate a resource for a multimedia session based on another trigger condition. In an instruction request, the MGC uses the SDP capability negotiation mechanism to perform session management.

```
          MGC to MG:
          MEGACO/3 [123.123.123.4]:55555
          Transaction = 10001 {
               Context = $ {
                   Add = A4444,
                   Add = $ {
                       Media {
                          TerminationState { smcn/scap = "2,4" },
                          Stream = 1 {
                                LocalControl { Mode = RecvOnly, },
                                Local {
                          v=0
                          c=IN IP4 $
                          m=audio $ RTP/AVP 18
                          a=rtpmap:18 G729/8000
                          a=fmtp:18 annexb=yes
                          a=mcap:1 PCMU/8000
                          pcfg:1 m=1 pt=1:0
                          pcfg:2
                                }
                          Stream = 2 {
                                LocalControl { Mode = RecvOnly, },
                                Local {
                          v=0
                          c=IN IP4 $
                          m=video $ RTP/AVP 100
                          a=rtpmap:100 H263-1998/90000
                          a=mcap:2 H264/90000
                          a=mfcap:2 profile-level-id=42A01E; packetization-mode=2
                          a=pcfg:3 m=2 pt=2:101
                          a=pcfg:4
                                }
                          }
                      }
                   }
               }
          }
```

In this embodiment, the MGC requires the MG to set up one audio stream and one video stream respectively. Two different media description configurations are given in the audio stream, and two different media description configurations are given in the video stream. The MGC uses a session capabilities property parameter (smcn/scap = "2,4", namely, selecting G.729B encoding for audio and selecting H.263 encoding for video) to instruct the MG to allocate resources for two media description configurations numbered 2 and 4.

Step 204: The MG sets up a media stream according to an instruction of the MGC, and reports allocated address information to the MGC.

In this embodiment of the present invention, the MGC first obtains the SDP capability negotiation mechanism supported by the MG, and then adopts a method for controlling a session capability and a corresponding SDP capability negotiation mechanism to complete negotiation and setup of a multimedia session. In the foregoing embodiment of the present invention, a technological gap in SDP capability negotiation in an architecture where an MG is separated from an MGC is filled.

### Embodiment 5

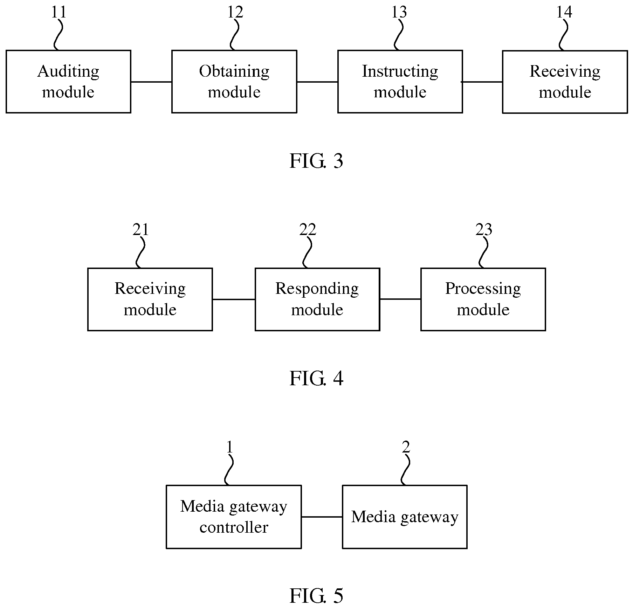

FIG. 3 is a schematic structural diagram of a media gateway controller according to an embodiment of the present invention. As shown in FIG. 3, in this embodiment, a media gateway controller (MGC) includes: an auditing module 11 and an obtaining module 12. The auditing module 11 is configured to send an audit command to a media gateway (MG) to determine whether the MG supports SDP capability negotiation, and the obtaining module 12 is configured to obtain an audit result returned by the MG in response to the audit command, where the audit result includes information that indicates the SDP capability negotiation is supported by the MG. The audit command includes a functional package of the SDP capability negotiation. If the MG supports the functional package of the SDP capability negotiation, it is considered that the MG supports the SDP capability negotiation.

When the MG supports the SDP capability negotiation, the auditing module 11 sends an audit command to the MG to obtain an SDP capability negotiation mechanism supported by the MG, where a property parameter of the SDP capability negotiation mechanism is carried in the audit command.

The obtaining module 12 is configured to obtain an audit result returned by the MG in response to the audit command, where the audit result includes the SDP capability negotiation mechanism supported by the MG.

When whether the MG supports the SDP capability negotiation is audited, specific audit content is whether the MG supports a functional package of the SDP capability negotiation; and when the SDP capability negotiation mechanism supported by the MG is audited, specific audit content is a property parameter that carries the SDP capability negotiation mechanism.

The functional package of the SDP capability negotiation is newly defined in this embodiment of the present invention, and is specifically used for auditing whether the MG supports the SDP capability negotiation. If the MG supports the functional package of the SDP capability negotiation, it is considered that the MG supports multimedia capability negotiation; and if the MG does not support the functional package of the SDP capability negotiation, it is considered that the MG does not support multimedia capability negotiation. A revised offer/answer SDP support package (Revised Offer/Answer SDP Support) is a functional package of the SDP capability negotiation, which is only an exemplary example, and definitely, the present invention is not limited here. Specifically, for a definition format of the revised offer/answer SDP support package, reference may be made to the first embodiment.

When the MG supports the SDP capability negotiation, the auditing module 11 may further obtain the SDP capability negotiation mechanism supported by the MG. The SDP capability negotiation mechanism may be implemented by defining a property parameter in the functional package of the SDP capability negotiation. Taking the revised offer/answer SDP support package as an example, a property parameter named SDP capability negotiation extension (SDPCapNeg Extensions) may be defined in the functional package for implementation.

For a definition format of the property parameter SDP capability negotiation extension (SDPCapNeg Extensions), reference may be made to the first embodiment. The property type is sub-list of string. The property parameter carries, through different string items, the SDP capability negotiation mechanism (namely, a multimedia capability negotiation mechanism) supported by the MG, where the SDP capability negotiation mechanism includes a transmission capability, a media property, an encoding or decoding type, and so on. A value of the property parameter may be an SDP capability negotiation mechanism named as authorized by the IANA, for example, a value "cap-v0" indicates an SDP transmission capability negotiation mechanism defined by the IETF, and "med-v0" indicates an SDP media type capability negotiation mechanism defined by the IETF.

The SDPCapNeg Extensions property parameter may be carried on different levels on the MG and used for media gateway resources of different granularities. Therefore, the auditing module may audit the property parameter that carries the SDP capability negotiation mechanism, to obtain SDP capability negotiation mechanisms with different levels on the MG. when the property parameter is used on a root termination (Root Termination), it indicates an SDP capability negotiation mechanism supported by the whole MG; or when the property parameter is used on a specific termination other than the root termination, it indicates an SDP capability negotiation mechanism supported by the specific termination; or when the property parameter is used on a certain media stream plane, it indicates an SDP capability negotiation mechanism supported by a media stream or a media type. For a specific instance, reference may be made to the description in the first embodiment.

If the obtaining module 12 learns that the MG supports a certain SDP capability negotiation mechanism, the obtaining module 12 may perform multimedia capability negotiation with the MG by using a corresponding SDP capability negotiation mechanism. For example, when the MG supports an SDP transmission capability negotiation mechanism indicated by "cap-v0", in SDP, the MGC may use an "a=acap:" attribute (attribute) defined in the mechanism to carry attribute information of SDP capability negotiation, use an "a=tcap:" attribute to carry a support capability of a transmission protocol, use an "a=pcfg:" attribute to carry a supported possible configuration, and use an "a=acfg:" attribute to carry a media configuration used in an SDP session description answer. In such a definition mechanism, the MGC may directly use a revised offer/answer SDP support mechanism, and does not need to perform conversion of an H.248 group message.

In another embodiment of the present invention, the media gateway controller may further include an instructing module 13 for instructing the MG about a valid set of configurations, that is, a combination of media description configurations that the media gateway controller wants to support. A property name is session capabilities (Session Capabilities), which is abbreviated to scap. A property type is sub-list of integer. The property parameter session capabilities carry different media description configurations through different string items. For a definition format of the property, reference may be made to the second embodiment.

The instructing module 13 further instructs the MG to allocate a resource for a multimedia session according to a valid set of media description configurations, where the valid set of media description configurations is carried by the session capabilities property parameter, and in an instruction request, the MGC uses the SDP capability negotiation mechanism to perform session management. For Details, reference is made to the fourth embodiment.

In this embodiment, the media gateway controller may further include a receiving module 14, configured to receive a resource allocation result returned by the MG.

In another embodiment of the present invention, the auditing module 11 in the media gateway controller may send an audit command to the MG to obtain a latent media description configuration supported by a termination of the MG, where a latent configurations property parameter is carried in the audit command, and may be used to determine whether another latent configuration (latent configuration) is supported on the termination of the MG, which may specifically be implemented by defining a property parameter that is named latent configurations (Latent Configurations) and is abbreviated to lconf, and a latent configuration indicates an additional media stream on the termination. For a definition format of the property, reference may be made to the third embodiment.

The obtaining module 12 of the MGC is configured to further obtain an audit result returned by the MG in response to the audit command, where the audit result includes a latent media description configuration supported by the termination of the MG.

Likewise, a session capabilities (Session Capabilities) property parameter and a latent configurations (Latent Configurations) property parameter may be used separately, or may also be used together. In a specific embodiment, the session capabilities (Session Capabilities) property parameter and the latent configurations (Latent Configurations) property parameter may be defined in a new functional package for implementation. For details, reference may be made to the third embodiment.

For specific signaling interaction, reference may be made to the fourth embodiment.

### Embodiment 6

A media gateway (MG) in this embodiment, as shown in FIG. 4, includes a receiving module 21 and a responding module 22.

The receiving module 21 is configured to receive an audit command sent by a media gateway controller MGC, where the audit command includes a functional package of SDP capability negotiation; and
the responding module 22 is configured to return an audit result to the MGC, and if the MG supports the function package of the SDP capability negotiation, return an audit result indicating that the SDP capability negotiation is supported.

When the MG supports the SDP capability negotiation, the receiving module 21 is further configured to receive an audit command sent by the MGC, where the audit command is used to obtain an SDP capability negotiation mechanism supported by the MG, and a property parameter of the SDP capability negotiation mechanism is carried in the audit command; and
the responding module 22 is configured to return an audit result to the MGC, where the audit result includes the SDP capability negotiation mechanism supported by the MG.

The receiving module 21 is further configured to receive an audit command sent by the MGC, where the audit command is used to obtain a latent media description configuration supported by a termination of the MG, and a latent configurations property parameter is carried in the audit command; and
the responding module 22 is configured to return an audit result to the MGC, where the audit result includes the latent media description configuration supported by the termination of the MG.

The receiving module 21 is configured to receive an instruction sent by the MGC, where a session capabilities property parameter is carried in the instruction; and in this case, the media gateway further includes a processing module 23, configured to allocate a resource for a multimedia session according to a valid set of media description configurations, where the valid set of media description configurations is carried by the session capabilities property parameter; and the responding module 22 is configured to return a resource allocation result of the processing module to the MGC.

If the MG does not support the SDP capability negotiation or does not support a command request sent by the MGC, an error response is returned to the MGC.

If the MG supports the SDP capability negotiation, the MG returns a supported SDP capability negotiation mechanism to the MGC. If the MG directly returns the supported SDP capability negotiation mechanism in response to the audit command of the MGC, where the audit command is used to audit the SDP capability negotiation mechanism, it also indicates that the MG supports the SDP capability negotiation.

For a specific implementation method, reference may be made to the first embodiment to the fourth embodiment.

### Embodiment 7

FIG. 5 is a schematic structural diagram of a system for multimedia capability negotiation according to an embodiment of the present invention. As shown in FIG. 5, the system for multimedia capability negotiation in this embodiment includes: a media gateway controller 1 and a media gateway 2. The media gateway controller 1 is configured to determine, through an audit command, whether the media gateway 2 supports SDP capability negotiation; and when the media gateway supports the SDP capability negotiation, the media gateway controller 1 further obtains an SDP capability negotiation mechanism supported by the media gateway 2.

The media gateway 2 is configured to return an audit result to the media gateway controller 1, where the audit result includes information indicating that the MG supports the SDP capability negotiation or the SDP capability negotiation mechanism supported by the MG.

The foregoing system embodiment is corresponding to the multimedia capability negotiation method and apparatus embodiments, and a specific implementation principle is not further described herein.

In the foregoing system embodiment, whether an MG supports multimedia capability negotiation may be determined, and when it is determined that the MG supports the multimedia capability negotiation, a multimedia capability negotiation mechanism supported by the MG may be obtained. In this embodiment of the present invention, a technological gap in multimedia capability negotiation in an architecture where an MG is separated from an MGC is filled.

Finally, it should be noted that the foregoing embodiments are only used to describe the technical solutions in the present invention, but are not intended to limit the present invention. Although the present invention is described in detail with reference to the exemplary embodiments, persons of ordinary skill in the art should understand that modifications or equivalent replacements may still be made to the technical solutions in the present invention, however, these modifications or equivalent replacements cannot make modified technical solutions depart from the scope of the technical solutions in the present invention.

## Claims

1. A method for multimedia capability negotiation, comprising:
determining (101), by a media gateway controller MGC and through an audit command, whether a media gateway MG supports Session Description Protocol, SDP, capability negotiation, wherein the audit command comprises a functional package of the SDP capability negotiation, and if the MG supports the functional package of the SDP capability negotiation, the MG supports the SDP capability negotiation;
and when it is determined (102) that the media gateway supports the SDP capability negotiation, obtaining, by the media gateway controller, an SDP capability negotiation mechanism supported by the media gateway, wherein the SDP capability negotiation mechanism includes a transmission capability, a media property, or an encoding or decoding type;
wherein a property parameter that carries the SDP capability negotiation mechanism is defined in the functional package of the SDP capability negotiation, and the MGC obtains, by auditing the property parameter that carries the SDP capability negotiation mechanism, the SDP capability negotiation mechanism supported by the MG;
wherein, the MGC obtains SDP capability negotiation mechanisms on different levels on the MG by auditing the property parameter that carries the SDP capability negotiation mechanism, wherein the different levels indicate a support condition of an SDP capability negotiation mechanism in different scenarios, and the property parameter is used on a root termination to indicate that an SDP capability negotiation mechanism is supported by the whole MG; or
the property parameter is used on a specific termination other than a root termination to indicate that an SDP capability negotiation mechanism is supported on the specific termination; or
the property parameter is used on a media stream plane to indicate that an SDP capability negotiation mechanism is supported by a media stream or a media type.

2. The method according to claim 1, wherein the functional package of the SDP capability negotiation comprises a revised offer/answer SDP support package, and if the MG supports the revised offer/answer SDP support package, the MG supports the SDP capability negotiation.

3. The method according to claim 1, wherein when the MG supports the SDP capability negotiation, the MGC obtains a valid set of media description configurations on the MG through a defined session capabilities property parameter.

4. The method according to claim 1 or 3, wherein, when the MG supports the SDP capability negotiation, the MGC obtains, by auditing a defined latent configurations property parameter, a latent media description configuration supported by a termination of the MG.

5. A media gateway controller MGC, comprising an auditing module and an obtaining module, wherein:
the auditing module is configured to send an audit command to a media gateway MG to determine whether the MG supports Session Description Protocol, SDP, capability negotiation, wherein the audit command comprises a functional package of the SDP capability negotiation, and if the MG supports the functional package of the SDP capability negotiation, the MG supports the SDP capability negotiation, the audit command further carries a property parameter of the SDP capability negotiation mechanism, to obtain an SDP capability negotiation mechanism supported by the MG, wherein the SDP capability negotiation mechanism includes a transmission capability, a media property, or an encoding or decoding type, wherein the property parameter is used on a root termination to indicate that an SDP capability negotiation mechanism is supported by the whole MG, or the the property parameter is used on a specific termination other than a root termination to indicate that an SDP capability negotiation mechanism is supported on the specific termination, or the property parameter is used on a media stream plane to indicate that an SDP capability negotiation mechanism is supported by a media stream or a media type; and
the obtaining module is configured to obtain an audit result returned by the MG in response to the audit command, wherein the audit result comprises information indicating that the MG supports the SDP capability negotiation and the SDP capability negotiation mechanism supported by the MG in response to the audit command.

6. The media gateway controller according to claim 5, wherein:
the auditing module is configured to send to the MG an audit command that carries a latent configurations property parameter, to obtain a latent media description configuration supported by a termination of the MG; and
the obtaining module is configured to obtain an audit result that comprises the latent media description configuration supported by the termination of the MG and is returned by the MG in response to the audit command.

7. A media gateway MG, comprising a receiving module and a responding module, wherein:
the receiving module is configured to receive an audit command sent by a media gateway controller MGC, wherein the audit command comprises a functional package of SDP capability negotiation and a property parameter that carries an Session Description Protocol, SDP, capability negotiation mechanism is defined in the functional package of the SDP capability negotiation, wherein the SDP capability negotiation mechanism includes a transmission capability, a media property, or an encoding or decoding type, and the property parameter can be used on root termination to indicate that an SDP capability negotiation mechanism is supported by the whole MG, or on a specific termination other than a root termination to indicate that an SDP capability negotiation mechanism is supported on the specific termination , or on a media stream plane to indicate that an SDP capability negotiation mechanism is supported by a media stream or a media type; and
if the MG supports the function package of the SDP capability negotiation, the responding module is configured to return an audit result that comprises information indicating the SDP capability negotiation is supported, and the SDP capability negotiation mechanism supported by the MG on different level according to the property parameter acquired from the audit command, wherein the different levels indicate a support condition of an SDP capability negotiation mechanism in different scenarios.

8. The media gateway according to claim 7, wherein:
the receiving module is configured to receive an audit command that is used to obtain a latent media description configuration supported by a termination of the MG and is sent by the MGC, wherein a latent configurations property parameter is carried in the audit command; and
the responding module is configured to return to the MGC an audit result that comprises the latent media description configuration supported by the termination of the MG.

9. A system for multimedia capability negotiation, comprising a media gateway controller MGC and a media gateway MG, wherein:
the MGC is according to claim 5 and the MG is according to claim 7.

## Patentansprüche

1. Verfahren zur Aushandlung von Multimediafahigkeit, umfassend:
Bestimmen (101), durch eine Multimedia-Gateway-Steuerung MGC und durch einen Prüfungsbefehl, ob ein Medien-Gateway MG Sitzungsbeschreibungsprotokoll- bzw. SDP-Tauglichkeit-Aushandlung unterstützt, wobei der Prüfungsbefehl ein funktionelles Paket der SDP-Tauglichkeit-Aushandlung umfasst, und wenn der MG das funktionelle Paket der SDP-Tauglichkeit-Aushandlung unterstützt, unterstützt der MG die SDP-Tauglichkeit-Aushandlung;
und wenn bestimmt (102) wird, dass der Medien-Gateway die SDP-Tauglichkeit-Aushandlung unterstützt, Erlangen, durch die Medien-Gateway-Steuerung, eines SDP-Tauglichkeit-Aushandlungsmechanismus, der von dem Medien-Gateway unterstützt wird, wobei der SDP-Tauglichkeit-Aushandlungsmechanismus eine Übertragungsfähigkeit, eine Medien-Eigenschaft oder einen Codierungs- oder Decodierungstyp enthält;
wobei ein Eigenschaftparameter, der den SDP-Tauglichkeit-Aushandlungsmechanismus trägt, in dem funktionellen Paket der SDP-Tauglichkeit-Aushandlung definiert ist und wobei die MGC durch Prüfen des Eigenschaftparameters, der den SDP-Tauglichkeit-Aushandlungsmechanismus trägt, den von dem MG unterstützten SDP-Tauglichkeit-Aushandlungsmechanismus erlangt;
wobei die MGC SDP-Tauglichkeit-Aushandlungsmechanismen auf verschiedenen Niveaus auf dem MG durch Prüfen des Eigenschaftpammeters, der den SDP-Tauglichkeit-Aushandlungsmechanismus trägt, erlangt, wobei die verschiedenen Niveaus einen Unterstützungszustand eines SDP-Tauglichkeit-Aushandlungsmechanismus in verschiedenen Szenarien angeben und der Eigenschaftparameter auf einer Ursprungsterminierung verwendet wird, um anzugeben, dass ein SDP-Tauglichkeit-Aushandlungsmechanismus von dem gesamten MG unterstützt wird; oder
wobei der Eigenschaftparameter auf einer spezifischen Terminierung außer einer Ursprungsterminierung verwendet wird, um anzugeben, dass ein SDP-Tauglichkeit-Aushandlungsmechanismus auf der spezifischen Terminierung unterstützt wird; oder
wobei der Eigenschaftparameter auf einer Medienstromebene verwendet wird, um anzugeben, dass ein SDP-Tauglichkeit-Aushandlungsmechanismus von einem Medienstrom oder einem Medientyp unterstützt wird.

2. Verfahren nach Anspruch 1, wobei das funktionelle Paket der SDP-Tauglichkeit-Aushandlung ein revidiertes Angebot-/Antwort-SDP-Unterstützungspaket umfasst, und wenn der MG das revidierte Angebot-/Antwort-SDP-Unterstützungspaket unterstützt, unterstützt der MG die SDP-Tauglichkeit-Aushandlung.

3. Verfahren nach Anspruch 1, wobei, wenn der MG die SDP-Tauglichkeit-Aushandlung unterstützt, die MGC einen gültigen Satz von Medienbeschreibung-Konfigurationen auf dem MG durch einen definierten Sitzungsfähigkeitseigenschaft-Parameter erlangt.

4. Verfahren nach Anspruch 1 oder 3, wobei, wenn der MG die SDP-Tauglichkeit-Aushandlung unterstützt, die MGC durch Prüfen eines definierten latenten Konfigurationseigenschaft-Parameters eine durch eine Terminierung des MG unterstützte latente Medienbeschreibung-Konfiguration erlangt.

5. Medien-Gateway-Steuerung MGC, umfassend ein Prüfungsmodul und ein Erlangungsmodul, wobei:
das Prüfungsmodul konfiguriert ist, einen Prüfungsbefehl an ein Medien-Gateway MG zu senden, um zu bestimmen, ob der MG Sitzungsbeschreibungsprotokoll- bzw. SDP-Tauglichkeit-Aushandlung unterstützt, wobei der Prüfungsbefehl ein funktionelles Paket der SDP-Tauglichkeit-Aushandlung umfasst, und wenn der MG das funktionelle Paket der SDP-Tauglichkeit-Aushandlung unterstützt, unterstützt der MG die SDP-Tauglichkeit-Aushandlung, wobei der Prüfungsbefehl ferner einen Eigenschaftparameter des SDP-Tauglichkeit-Aushandlungsmechanismus trägt, um einen von dem MG unterstützten SDP-Tauglichkeit-Aushandlungsmechanismus zu erlangen, wobei der SDP-Tauglichkeit-Aushandlungsmechanismus eine Übertragungsfähigkeit, eine Medien-Eigenschaft oder einen Codierungs- oder Decodierungstyp enthält, wobei der Eigenschaftparameter auf einer Ursprungsterminierung verwendet wird, um anzugeben, dass ein SDP-Tauglichkeit-Aushandlungsmechanismus von dem gesamten MG unterstützt wird, oder wobei der Eigenschaftparameter auf einer spezifischen Terminierung außer einer Ursprungsterminierung verwendet wird, um anzugeben, dass ein SDP-Tauglichkeit-Aushandlungsmechanismus auf der spezifischen Terminierung unterstützt wird, oder wobei der Eigenschaftparameter auf einer Medienstromebene verwendet wird, um anzugeben, dass ein SDP-Tauglichkeit-Aushandlungsmechanismus von einem Medienstrom oder einem Medientyp unterstützt wird; und
wobei das Erlangungsmodul konfiguriert ist, ein als Reaktion auf den Prüfungsbefehl durch den MG zurückgesandtes Prüfungsergebnis zu erlangen, wobei das Prüfungsergebnis Informationen umfasst, die angeben, dass der MG die SDP-Tauglichkeit-Aushandlung und den von dem MG unterstützten SDP-Tauglichkeit-Aushandlungsmechanismus unterstützt, als Reaktion auf den Prüfungsbefehl.

6. Medien-Gateway-Steuerung nach Anspruch 5, wobei:
das Prüfungsmodul konfiguriert ist, einen Prüfungsbefehl an den MG zu senden, der einen latenten Konfigurationseigenschaftparameter trägt, um eine von einer Terminierung des MG unterstützte latente Medienbeschreibung-Konfiguration zu erlangen; und
das Erlangungsmodul konfiguriert ist, ein Prüfungsergebnis zu erlangen, das die von der Terminierung des MG unterstützte latente Medienbeschreibung-Konfiguration umfasst und von dem MG als Reaktion auf den Prüfungsbefehl zurückgesandt wird.

7. Medien-Gateway MG, umfassend ein Empfangsmodul und ein Antwortmodul, wobei:
das Empfangsmodul konfiguriert ist, einen von einer Medien-Gateway-Steuerung MGC gesandten Prüfungsbefehl zu empfangen, wobei der Prüfungsbefehl ein funktionelles Paket von SDP-Tauglichkeit-Aushandlung und einen Eigenschaftparameter umfasst, der einen Sitzungsbeschreibungsprotokoll- bzw. SDP-Tauglichkeit-Aushandlungsmcchanismus trägt, oder der in dem funktionellen Paket der SDP-Tauglichkeit-Aushandlung definiert ist, wobei der SDP-Tauglichkeit-Aushandlungsmechanismus eine Übertragungsfähigkeit, eine Medien-Eigenschaft oder einen Codierungs- oder Decodierungstyp enthält und der Eigenschaftparameter auf Ursprungsterminierung verwendet werden kann, um anzugeben, dass ein SDP-Tauglichkeit-Aushandlungsmechanismus von dem gesamten MG unterstützt wird, oder auf einer spezifischen Terminierung außer einer Ursprungsterminierung, um anzugeben, dass ein SDP-Tauglichkeit-Aushandlungsmechanismus auf der spezifischen Terminierung unterstützt wird, oder auf einer Medienstromebene, um anzugeben, dass ein SDP-Tauglichkeit-Aushandlungsmechanismus von einem Medienstrom oder einem Medientyp unterstützt wird; und
wenn der MG das Funktionspaket der SDP-Tauglichkeit-Aushandlung unterstützt, ist das Antwortmodul konfiguriert, ein Prüfungsergebnis zurückzusenden, das Informationen, die angeben, dass die SDP-Tauglichkeit-Aushandlung unterstützt wird, und den von dem MG auf verschiedenen Ebenen unterstützten SDP-Tauglichkeit-Aushandlungsmechanismus gemäß dem von dem Prüfungsbefehl erfassten Eigenschaftparameter umfasst, wobei die verschiedenen Ebenen einen Unterstützungszustand eines SDP-Tauglichkeit-Aushandlungsmechanismus in verschiedenen Szenarien angeben.

8. Medien-Gateway nach Anspruch 7, wobei:
das Empfangsmodul konfiguriert ist, einen Prüfungsbefehl zu empfangen, der verwendet wird, eine von einer Terminierung des MG unterstützte latente Medienbeschreibung-Konfiguratian zu erlangen, und der von der MGC gesandt wird, wobei ein latenter Konfigurationseigenschaftparameter in dem Prüfungsbefehl getragen wird; und
das Antwortmodul konfiguriert ist, ein Prüfungsergebnis an die MGC zurückzusenden, das die von der Terminierung des MG unterstützte latente Medienbeschreibung-Konfiguration umfasst.

9. System für Multimedia-Tauglichkeit-Aushandlung, umfassend eine Medien-Gateway-Steuerung MGC und einen Medien-Gateway MG, wobei:
die MGC gemäß Anspruch 5 ist und der MG gemäß Anspruch 7 ist.

## Revendications

1. Procédé de négociation de capacité multimédia, comprenant de :
déterminer (101), par un contrôleur de passerelle média MGC et par le biais d'une commande d'audit, si une passerelle média MG supporte la négociation de capacité de protocole de description de session, SDP, dans lequel la commande d'audit comprend un ensemble fonctionnel de la négociation de capacité SDP, et si la MG supporte l'ensemble fonctionnel de la négociation de capacité SDP, la MG supporte la négociation de capacité SDP;
et lorsqu'il est déterminé (102) que la passerelle média supporte la négociation de capacité SDP, obtenir, par le contrôleur de passerelle média, un mécanisme de négociation de capacité SDP supporté par la passerelle média, dans lequel le mécanisme de négociation de capacité SDP comprend une capacité de transmission, une propriété de média, ou un type de codage ou de décodage ;
dans lequel un paramètre de propriété qui contient le mécanisme de négociation de capacité SDP est défini dans l'ensemble fonctionnel de la négociation de capacité SDP, et le MGC obtient, en auditant le paramètre de propriété qui contient le mécanisme de négociation de capacité SDP, le mécanisme de négociation de capacité SDP supporté par la MG ;
dans lequel, le MGC obtient des mécanismes de négociation de capacité SDP sur différents niveaux sur la MG en auditant le paramètre de propriété qui contient le mécanisme de négociation de capacité SDP, dans lequel les différents niveaux indiquent une condition de support d'un mécanisme de négociation de capacité SDP dans différents scénarios, et le paramètre de propriété est utilisé sur une terminaison racine pour indiquer qu'un mécanisme de négociation de capacité SDP est supporté par l'ensemble de la MG ; ou
le paramètre de propriété est utilisé sur une terminaison spécifique autre qu'une terminaison racine pour indiquer qu'un mécanisme de négociation de capacité SDP est supporté sur la terminaison spécifique ; ou
le paramètre de propriété est utilisé sur un plan de flux média pour indiquer qu'un mécanisme de négociation de capacité SDP est supporté par un flux média ou un type de média.

2. Procédé selon la revendication 1, dans lequel l'ensemble fonctionnel de la négociation de capacité SDP comprend un ensemble de support SDP d'offre/réponse révisée, et si la MG supporte l'ensemble de support SDP d'offre/réponse révisée, la MG supporte la négociation de capacité SDP.

3. Procédé selon la revendication 1, dans lequel lorsque la MG supporte la négociation de capacité SDP, le MGC obtient un ensemble valide de configurations de description de média sur la MG par l'intermédiaire d'un paramètre de propriété de capacités de session défini.

4. Procédé selon la revendication 1 ou 3, dans lequel, lorsque la MG supporte la négociation de capacité SDP, le MGC obtient, en auditant un paramètre de propriété de configurations latentes défini, une configuration de description de média latente supportée par une terminaison de la MG.

5. Contrôleur de passerelle média MGC, comprenant un module d'audit et un module d'obtention, dans lequel :
le module d'audit est configuré pour envoyer une commande d'audit à une passerelle média MG pour déterminer si la MG supporte la négociation de capacité de protocole de description de session, SDP, dans lequel la commande d'audit comprend un ensemble fonctionnel de négociation de capacité SDP, et si la MG supporte l'ensemble fonctionnel de la négociation de capacité SDP, la MG supporte la négociation de capacité SDP, la commande d'audit contient en outre un paramètre de propriété du mécanisme de négociation de capacité SDP, pour obtenir un mécanisme de négociation de capacité SDP supporté par la MG, dans lequel le mécanisme de négociation de capacité SDP comprend une capacité de transmission, une propriété de média ou un type de codage ou de décodage, dans lequel le paramètre de propriété est utilisé sur une terminaison racine pour indiquer qu'un mécanisme de négociation de capacité SDP est supporté par l'ensemble de la MG, ou le paramètre de propriété est utilisé sur une terminaison spécifique autre qu'une terminaison racine pour indiquer qu'un mécanisme de négociation de capacité SDP est supporté sur la terminaison spécifique ou le paramètre de propriété est utilisé sur un plan de flux média pour indiquer qu'un mécanisme de négociation de capacité SDP est supporté par un flux média ou un type de média ; et
le module d'obtention est configuré pour obtenir un résultat d'audit renvoyé par la MG, en réponse à la commande d'audit, dans lequel le résultat d'audit comprend des informations indiquant que la MG supporte la négociation de capacité SDP et Le mécanisme de négociation de capacité SDP supporté par la MG en réponse à la commande d'audit.

6. Contrôleur de passerelle média selon la revendication 5, dans lequel :
le module d'audit est configuré pour envoyer à la MG une commande d'audit qui contient un paramètre de propriété de configurations latentes, pour obtenir une configuration de description de média latente supportée par une terminaison de la MG; et
le module d'obtention est configuré pour obtenir un résultat d'audit qui comprend la configuration de description de média latente supportée par la terminaison de la MG et est renvoyé par la MG en réponse à la commande d'audit.

7. Passerelle média MG comprenant un module de réception et un module de réponse, dans lequel :
le module de réception est configuré pour recevoir une commande d'audit envoyée par un contrôleur de passerelle média MGC, dans lequel la commande d'audit comprend un ensemble fonctionnel de négociation de capacité SDP et un paramètre de propriété qui contient un mécanisme de négociation de capacité de protocole de description de session SDP qui est défini dans l'ensemble fonctionnel de la négociation de capacité de SDP, dans lequel le mécanisme de négociation de capacité SDP comprend une capacité de transmission, une propriété de média, ou un type de codage ou de décodage, et le paramètre de propriété peut être utilisé sur la terminaison racine pour indiquer qu'un mécanisme de négociation de capacité SDP est supporté par l'ensemble de la MG, ou sur une terminaison spécifique autre qu'une terminaison racine pour indiquer qu'un mécanisme de négociation de capacité SDP est supporté sur la terminaison spécifique, ou sur un plan de flux média pour indiquer qu'un mécanisme de négociation de capacité SDP est supporté par un flux média ou un type de média ; et
si la MG supporte l'ensemble fonctionnel de la négociation de capacité SDP, le module de réponse est configuré pour renvoyer un résultat d'audit qui comprend des informations indiquant que la négociation de capacité SDP est supportée, et le mécanisme de négociation de capacité SDP supporté par la MG sur différents niveau en fonction du paramètre de propriété acquis à partir de la commande d'audit, dans lequel les différents niveaux indiquent une condition de support d'un mécanisme de négociation de capacité SDP dans différents scénarios.

8. Passerelle média selon la revendication 7, dans laquelle :
le module de réception est configuré pour recevoir une commande d'audit qui est utilisée pour obtenir une configuration de description de média latente supportée par une terminaison de la MG et est envoyée par le MGC, dans laquelle un paramètre de propriété de configurations latentes est contenu dans la commande d'audit ; et
le module de réponse est configuré pour renvoyer à la MGC un résultat d'audit qui comprend la configuration de description de média latente supportée par la terminaison de la MG.

9. Système de négociation de capacité multimédia, comprenant un contrôleur de passerelle média MGC et une passerelle média MG, dans lequel :
le MGC est selon la revendication 5 et la MG est selon la revendication 7.
